# EUROPÄISCHE PATENTSCHRIFT

(11) **EP 1 869 979 B1**
(45) Veröffentlichungstag und Bekanntmachung des Hinweises auf die Patenterteilung: **20.09.2017**
(21) Anmeldenummer: 07109965.9
(22) Anmeldetag: 11.06.2007
(51) Int. Cl.: A01N 37/12, A01N 37/36, A61K 31/22, A61K 31/23

(54) **MITTEL GEGEN KOPFLÄUSE**
AGENT AGAINST HEADLICE
AGENT CONTRE LES POUX DE TÊTE

(30) Priorität: 23.06.2006 DE 102006029340
(43) Veröffentlichungstag der Anmeldung: 26.12.2007
(73) Patentinhaber: Alpha-Biocare GmbH, 41468 Neuss (DE)
(72) Erfinder: Mehlhorn, Heinz, 41468, Neuss (DE); Schmidt, Jürgen, 40221, Düsseldorf (DE); Schmal, Günter, 50735, Köln (DE)
(74) Vertreter: Gille Hrabal

(56) Entgegenhaltungen:
- EP-A1- 0 862 861
- WO-A1-2006/028170
- GB-A- 2 042 893
- JP-A- 10 316 509
- US-B1- 6 193 974
- DATABASE WPI Week 200250 Thomson Scientific, London, GB; AN 2002-465950 XP002688282, -& JP 2002 068917 A (LION CORP) 8. März 2002 (2002-03-08)

## Beschreibung

Eine Vielzahl von ektoparasitschen oder schädigenden Insekten und Milben stellen für den Menschen, Tiere und Nutzpflanzen weltweit ein gesundheitliches Problem dar und/oder verursachen wirtschaftliche Verluste. Auch in europäischen Ländern wird z.B. weiterhin von relativ hohen Infektionsraten des Menschen mit Kopfläusen berichtet (z.B. Downs AMR, Stafford KA, Coles GC (1999) Head lice: prevalence in school children and insecticide resistance. Parasitology Today 15:1-3). Ein großer Teil der Bevölkerung leidet unter Allergien, die durch Staubmilben in Wohnungen bedingt sind. Milben, Haarlinge, Flöhe und Läuse parasitieren auch bei vielen Heim- und Nutztieren. Krätzemilben minieren in der Haut, viele Menschen und Tiere werden bei Aufenthalt im Freien von Grasmilben befallen (Mehlhorn, H. (ed.) Encylopedia of Parasitology, 2. Aufl. 2001, Springer Verlag, Heidelberg, Berlin).

Um einen Befall mit Ektoparasiten zu beseitigen, müssen Präparate eingesetzt werden, die typischerweise Insektizide oder Acarizide enthalten, Die Anwendung solcher Präparate am Menschen kann mit Nebenwirkungen behaftet sein, und viele Anwender haben daher Furcht vor möglichen Nebenwirkungen chemischer Substanzen. So können natürliche oder synthetische Pyrethroide, z.B. Permethrin, Allergien hervorrufen und sind nerventoxisch; Lindan reizt die Haut und ist leber- und nerventoxisch, Carbamate sind nerventoxisch und karzinogen, Crotamiton, Benzylbenzoat und Malathion reizen Haut und Augen. Obwohl gravierende Nebenwirkungen bei normaler Anwendung selten sind, können sie vorkommen und dann ein ernsthaftes Risiko darstellen.

Viele handelsübliche Produkte sind außerdem durch die erforderliche Formulierung der Wirkstoffe mit organischen Lösungsmitteln relativ stark hautirritierend, so dass viele Kinder nach Anwendung von zahlreichen Kopflausmitteln unter Hautrötung, Juckreiz und Schuppenbildung leiden. Verschiedene Wirkstoffe, z.B. Pyrethroide oder Azadirachtin, sind darüber hinaus in wässriger Formulierung nur begrenzt lagerstabil.

Zur Anwendung gegen Läuse sind auch verschiedene Produkte auf Basis von pflanzlichen Grundstoffen verfügbar, denen viele Konsumenten ein größeres Vertrauen in die Unbedenklichkeit entgegenbringen. Insbesondere enthalten mehrere kommerzielle Produkte aus Kokosnüssen gewonnene Fettsäurefraktionen. US-A-4,51 8,593 offenbart C₂-C₈ Carbonsäuren als Aktivsubstanz gegen Läuse. Laut diesem Dokument wirkt jedoch nur Essigsäure gut, während längerkettige Säuren einen weniger befriedigenden Effekt haben. Nachteilig sind der sehr unangenehme Geruch dieser Fettsäuren und ihre hautreizende Wirkung.

Andere Produkte enthalten Extrakte aus Neem (WO 02/060398 A1) oder Terpene aus Teebaumöl, z.B. US 6,342,253 B1, oder D-Limonen (US 6,784,211). Diese weniger effektiven und allergisierenden Mittel müssen jedoch im Allgemeinen mehrmals angewendet werden, bis der Läusebefall beseitigt ist, weil sie nicht auf Nissen wirken.

Das Patent US 6,663,876 B2 offenbart die Anwendung von Fettsäure-Estern, z.B. Isopropylmyristat, gegen Ektoparasiten.

WO 2005/027636 A2 offenbart zwei unterschiedliche Gruppen von Wirkstoffen gegen Ektoparasiten, erstens Ester von Fettsäuren mit mono- di-, tri- oder Poly-Alkoholen und zweitens Ether von niedrigkettigen Fettsäuren mit Glycerin, besonders beansprucht wird als am besten wirksame Substanz Isopropylmyristat. Auch aufgeführt werden Beispiele mit Caprylcaproyl macrogol-8-glycerid; Capryl-/Caprinsäure-Triglycerid, Diethylengylcolmonomethylether und Zusatz der Insektizide Permethrin bzw. d-Phenotrin. Die Verwendung von gemischten Estern oder von Glycerylestern, wie in der vorliegenden Erfindung beschrieben, ist jedoch weder offenbart noch nahegelegt. Es gibt trotz der nachstehend erläuterten nachteiligen Effekte von Isopropylmyristat bereits mehrere kommerzielle Präparate gegen Kopfläuse, die neben Insektiziden auch Isopropylmyristat enthalten, z.B. Elmite^{®} und Acticin^{®}.

Auch die Patentanmeldungen US 2003/0202997 A1 und US 6,663,876 B2 beschreiben Mittel aus verschiedenen Stoffgruppen gegen Ektoparasiten, bestehend aus Fettsäureestern, z.B. Isopropylmyristat, Siloxan und ggf. einem Insektizid.

US-B-6,607,716 offenbart ein Kopflausmittel, dessen Wirkstoff ein ionisches Salz darstellt. Bevorzugt enthält das Mittel als Hilfsstoff zur Formulierung Polyoxyethylenesorbitanmonolaurat. Isopropylmyristat und Sorbitanmonolaurat sind als bevorzugte Wirkstoffe beschrieben. Ein Beispiel ist aufgeführt, in dem Glycerinmonostearat zur Verdickung des Gels, bestehend aus den zuvor genannten Stoffen, zugesetzt wird, nicht aber als Wirkstoff zur Behandlung der Kopfläuse verwendet wird. Die auch aufgeführten Polyethylenglycol-haltigen Detergentien sollten nicht in Kopflausmitteln enthalten sein, denn es besteht die Gefahr, dass sie bei Kindern Nebenwirkungen bis zum allergischen Schock verursachen können und dass sie die Haut durchlässig machen für schädliche und/oder allergisierende Substanzen.

Pearlman beschreibt im US Patent 6,541,455 B2 mit dem Titel " Methods and kits for removing, treating, or preventing lice with driable pediculostatic agents" kosmetische Formulierungen, die erfindungsgemäß auf den Haaren eingetrocknet werden müssen, um hierdurch Kopfläuse mit wachsartigen Stoffen einzuschließen und zu ersticken. Unter einer großen Vielzahl von geeigneten wachsartigen oder lipophilen Stoffen werden Alkohol- und Glycerylester von Fettsäuren als Hilfsstoffe zur Formulierung der Mittel genannt. Im Unterschied zur vorliegenden Erfindung müssen alle diese Substanzgemische nach Verteilen in den Haaren durch Fönen angetrocknet werden, um die Atemöffnungen der Läuse zu verschließen. Der Nachteil dieser Kopflausmittel ist, dass die Haare über viele Stunden mit wachsartigen Substanzen verschmiert getragen werden müssen, bevor die Therapie durch eine Haarwäsche zum Abschluss gebracht werden kann.

Die japanische Patentanmeldung JP-A-2002-06891 7 beschreibt die Anwendung von Enzymen, bevorzugt Proteasen, in Kombination mit Fettsäureglyceriden zur Anwendung gegen Insekten.

JP-A- 63233902 beschreibt Produkte für die pflanzliche Agrikultur, die hergestellt werden, indem chemische Aktivstoffe zusammen mit aliphatischen polyhydrischen Alkoholestern von Fettsäuren formuliert werden. Diese Mittel enthalten daher bereits bekannte oder noch zu entwickelnde Agrochemikalien. Weder die Verwendung von gemischten Estern noch deren Verwendung ohne Zusatz von aktiven Wirkstoffen werden in diesem Patent offenbart oder nahe gelegt.

EP 0 862 861 A1 offenbart Mittel, die als Wirkstoff Fettsäureester von Glycerin oder Polyglycerin enthalten, zur Bekämpfung von schädlichen Insekten und Milben. Milch-, Citronen- und Weinsäureester von Mono- oder Diglyceriden sind nicht offenbart.

JP 10 316 509 offenbart Glycerin-Monoester mit C₁₀-C₁₈-Fettsäuren als insektizide, akarizide und mikrobizide Wirkstoffe zur Behandlung von Pflanzen. Milch-, Citronen- und Weinsäureester von Mono- oder Diglyceriden sind ebenfalls nicht offenbart.

WO 2006/0281 70 A beschreibt Monoester von Glycerin oder Polyglycerin mit Fettsäuren als Repellent für pflanzenschädigende Insekten. Das Dokument offenbart keine Mittel zum Immobilisieren (d.h. Abtöten) und Entfernen von Kopfläusen.

US 6 193 974 B1 beschreibt Formulierungen von Azadirachtin, die als Emulgiermittel Essigsäure-, Milchsäure- oder Citronensäureester von Mono- oder Dicglyceriden enthalten können. Es ist nur die Verwendung als Pflanzenschutzmittel offenbart; insbesondere werden der Schutz von Lebensmitteln und faserartigen Erntegütern erwähnt. Azadirachtin ist im erfindungsgemäßen Mittel dagegen nicht enthalten.

GB 2 042 893 offenbart Formulierungen von Benzylbenzoat zur Bekämpfung von Hausstaubmilben, die als die Verdunstung von Benzylbenzoat hemmenden Zusatz Fettsäure-Mono- oder Dicglyceride enthalten. Milch-, Citronen- und Weinsäureester von Mono- oder Diglyceriden sind nicht offenbart. Kopfläuse gehören nicht zur Gruppe der Milben, sondern es handelt sich um Insekten.

Die Aufgabe der vorliegenden Erfindung ist vor diesem Hintergrund, ein einfach anzuwendendes, schnell und effektiv gegen Kopfläuse wirkendes und dabei für den Anwender gesundheitlich völlig unbedenkliches Mittel bereitzustellen.

Diese Aufgabe wird durch das Mittel zur Anwendung in einem Verfahren zum Immobilisieren und anschließenden Entfernen von Kopfläusen gemäß Anspruch 1 gelöst. Bevorzugte Ausführungsformen sind in den Unteransprüchen angegeben.

Es wurde nämlich von den Erfindern gefunden, dass die erfindungsgemäßen Mittel überraschenderweise Kopfläuse besonders effektiv abtöten.

Das erfindungsgemäße Mittel kann als Lösung, Shampoo, Schaum, Gel, Puder, Pulver, Spray, Paste oder jede andere übliche Formulierungsart formuliert werden. Die Lösung kann entweder zum Aufbringen mittels eines Applikators oder einer Pipette oder auch mit der Hand wie auch als Pumpspray formuliert sein. Auch die Formulierung als Konzentrat, das vom Anwender kurz vor dem Aufbringen, bevorzugt mit Wasser, verdünnt wird, ist erfindungsgemäß möglich.

Die Anwendung des erfindungsgemäßen Mittels erfolgt topisch, d.h. äußerlich auf den befallenen Stellen oder auch der gesamten Körperoberfläche.

Die Anwendung des erfindungsgemäßen Mittels erfolgt direkt auf dem befallenen Menschen. Sie kann aber auch auf Möbeln, Decken, Kissen,

Matratzen, Kleidung, Kopfbedeckungen wie Mützen oder Helmen, insbesondere bei Läusebefall erfolgen (nicht beansprucht).

Geeignete Lösungsmittel für die Wirkstoffe können Wasser, wässrige Lösungen, organische Lösungsmittel, z.B. Alkohole wie Ethanol, Propanol, Isopropanol, Polyethylenglycol oder Glycole, z.B. Ethylenglycol oder Glycerin, Öle wie z.B. bevorzugt Rapsöl oder niedrigsiedendes Kokosnussöl, Fette, Wachse und dergleichen sein.

Die erfindungsgemäßen Mittel können je nach beabsichtigter Anwendung zusammen mit üblichen weiteren Detergentien (Tenside, z.B. Cocamidopropylbetain oder Alkylpolyglukoside wie z.B. Plantacare^{®}), Emulgatoren oder Fetten, pflanzlichen Ölen oder Mineralölen oder Paraffin- oder Siliconölen, Excipienten, Konservierungsstoffen, Farbstoffen, Duftstoffen, Verdickern, Gleitmitteln, Antioxidantien, Schaumhemmern, Feuchthaltemitteln, Weichmachern, Benetzungsmitteln und/oder Pigmenten formuliert werden.

Gegebenenfalls kann das Mittel durch Zusatz üblicher Puffer auf einen gewünschten pH-Bereich von 4,5-8, bevorzugt 5 bis 6,5, eingestellt werden

Als Treibgas für Sprays eignen sich alle üblichen Treibgase, z.B. verflüssigte Gase wie Isododecan. Auch die Formulierung als Pumpspray ist erfindungsgemäß möglich, wobei übliche Pumpsprühflaschen zum Einsatz kommen.

Das erfindungsgemäße Mittel kann auch Farb- und/oder Parfümstoffe enthalten,

Das erfindungsgemäße Mittel enthält zwischen 0,1 und 95 Gew.-% an einem oder mehreren wirksamen Glycerinestern, bevorzugt 0,5 bis 15 Gew.-%, jeweils bezogen auf die Gesamtzusammensetzung des Mittels.

Das erfindungsgemäße Mittel kann nach Bedarf eine oder mehrere juckreizstillende, wundheilende, haut-, haar- oder fellpflegende oder kosmetisch wirksame oder pflanzenpflegende Substanz enthalten. Auch biozide Substanzen können enthalten sein, z.B. Insektizide oder Akarizide wie z.B. aus der Gruppe der Pyrethrum-Extrakte, Pyrethroide oder Neonicotinoide oder Malathion, oder aus der Gruppe der macrocyclischen Lactone, z.B. Ivermectin, oder der Phenylpyrazole, z.B. Fipronil, oder der Alkylphosphate, z.B. Diazinon, Phoxim oder Dimpylat, oder der Carbamate, z.B. Propoxur. Das Mittel kann auch einen Extrakt aus Azadirachta indica (Neem) oder einen Pflanzenextrakt aus einer Quassia-Art als weiteren Wirkstoff enthalten.

Die erfindungsgemäß bevorzugten Wirkstoffe sind in der Europäischen Gemeinschaft und in Japan als Zusatzstoffe für Lebensmittel als Emulgatoren registriert und zugelassen. Diese werden unter folgenden Nummern gelistet:
E 471 Gylceride von Fettsäuren
E472(a) Essigsäureester von Mono- und Diglyceriden von Speisefettsäuren (nicht erfindungsgemäß),
E472(b) Milchsäureester von Mono- und Diglyceriden von Speisefettsäuren,
E472(c) Zitronensäureester von Mono- und Diglyceriden von Speisefettsäuren,
E472(d) Weinsäureester von Mono- und Diglyceriden von Speisefettsäuren,
E472(e) Mono- und Diacetylsäureester von Mono- und Diglyceriden von Speisefettsäuren (nicht erfindungsgemäß),
E472(f) gemischte Essigsäure- und Weinsäureester von Mono- und Diglyceriden von Speisefettsäuren (nicht erfindungsgemäß)
E475 Polyglycerinester von Speisefettsäuren

Da diese Stoffe vor ihrer Zulassung als Lebensmittel-Emulgatoren umfassend auf Unbedenklichkeit für den Menschen geprüft worden sind, ist eine exzellente Produktsicherheit der Mittel auch in der erfindungsgemäßen Anwendung gewährleistet. Als Inhaltsstoff von oral zu verabreichenden Medikamenten und Lebensmittel ist E472(c) sogar für Säuglinge und Kleinkinder zugelassen.

Die Fettsäuren des Mono- oder Diglycerids als wirksamer Bestandteil sind bevorzugt Laurinsäure, Ölsäure oder Stearinsäure.

Bevorzugt ist der wirksame Bestandteil ein Mono- oder Diglycerid von C₆-C₁₈ Carbonsäuren, das zusätzlich mit Milchsäure, Zitronensäure und/oder Weinsäure mono- oder di-verestert ist. Das Mono- oder Diglycerid ist besonders bevorzugt mit Stearinsäure, Laurinsäure oder Ölsäure und zusätzlich mit Zitronensäure oder Milchsäure verestert.

Besonders bevorzugte Wirkstoffe gemäß der Erfindung sind Glycerinmonostearatcitrat, Glycerinmonooleatlactat und Glycerinmonolaurat, , von denen Glycerinmonolaurat besonders bevorzugt ist.

Ein wesentlicher Vorteil des erfindungsgemäßen Mittels ist die Tatsache, dass die Mehrzahl der Verbraucher in der heutigen Zeit Naturprodukte oder naturnahe synthetische Produkte in der Art des vorliegenden Mittels gegenüber industriell hergestellten Chemikalien bevorzugt, insbesondere gegenüber Insektiziden oder Akariziden, denen viele Menschen sehr kritisch gegenüberstehen.

Eltern verlangen von Produkten, die sie bei ihren Kindern anwenden, ein hohes Maß gesundheitlicher Unbedenklichkeit. Von Shampoos wird erwartet, dass sie einen feinen und stabilen Schaum bilden und weder die Augen noch die Haut reizen. Sie dürfen bei Kindern kein Brennen in den Augen verursachen. Dies ist bei den erfindungsgemäßen Mittel der Fall.

Für den Einsatz in kosmetisch/dermatologischen Präparaten gegen Ektoparasiten ist von besonderem Vorteil, dass die Mittel auf pflanzlicher Basis und frei von Polyethylenglycol hergestellt sind. Das Mittel ist dermatologisch sicher, d.h. es bewirkt keine Sensibilisierung oder Irritation der Haut. Haare werden nicht angegriffen.

Ein anderer Vorteil der erfindungsgemäßen Mittel zur Verwendung in einem Verfahren zum Abtöten von Kopfläusen besteht darin, dass nicht nur die larvalen und adulten Stadien eliminiert werden, sondern auch die Embryonen in den Eiern, gegen die die nach Stand der Technik zur Verfügung stehenden Präparate nicht oder nicht ausreichend wirken.

Die erfindungsgemäßen Mittel sind leicht auch ohne Erhitzen zu Shampoo oder anderen Formulierungen zu verarbeiten, da sie eine gute Emulgierbarkeit besitzen bzw. selbst emulgierend sind. Die Fertigprodukte weisen eine hohe physikalische Stabilität bei der geforderten Konsistenz auf, und als Shampoo formuliert zeigen sie eine gute Schaumbildung.

Ein weiterer Vorteil dieser Mittel besteht darin, dass sie leicht biologisch abbaubar sind und keine persistierenden oder toxischen Rückstände bilden, die die Umwelt belasten könnten.

Wie den nachfolgenden Versuchen beschrieben, sind die erfindungsgemäßen Verbindungen in der Wirksamkeit gegen Kopfläuse dem in US 6,663,876 und WO 2005/027636 A2 offenbarten Isopropylmyristat deutlich überlegen. Nach den eigenen Versuchen hat Isopropylmyristat keine ausreichende Wirkung auf Läuse. Isopropylmyristat hat zudem den Nachteil, dass es einen hervorragenden Permeationsbeschleuniger für andere Moleküle darstellt. Diese Eigenschaft von Isopropylmyristat wird sogar zur Applikation von topischen Medikamenten durch die Haut medizinisch genutzt. In Mitteln gegen Ektoparasiten kann der Zusatz von Isopropylmyristat jedoch potentiell gesundheitsgefährdend sein, da es Insektizide oder andere Chemikalien in den Körper gelangen lässt.

### Beispiele:

Die folgenden Beispiele werden zur näheren Erläuterung der Erfindung angegeben.

Für die nachfolgend beschriebenen Beispiele 1 und 2 wurden die Prüfsubstanzen in einem einheitlichen Lösungsmittelsystem, bestehend aus Cocamidopropylbetain und Wasser, in folgenden Zusammensetzungen angesetzt: (alle %-Angaben in Gew.-%)

### (Beispiele 1 bis 4: Erfindung; Beispiele 5 bis 8: Vergleich; Beispiel 9: Kontrolle)

1. Glycerinmonostearatcitrat 5%, Cocamidopropylbetain 10%, Wasser ad 100%
2. Glycerinmonooleatlactat 5%, Cocamidopropylbetain 10%, Wasser ad 100%
3. Glycerinmonolaurat 5%, Cocamidopropylbetain 10%, Wasser ad 100%
4. Glycerinmonocaprat 5%, Cocamidopropylbetain 10%, Wasser ad 100% (nicht erfindungsgemäß)
5. Isopropylmyristat 5%, Cocamidopropylbetain 10%, Wasser ad 100%
6. Capryl-/Caprinsäure-Triglycerid 5%, Cocamidopropylbetain 10%, Wasser ad 100%
7. Hydriertes Kokosnussöl 5%, Cocamidopropylbetain 10%, Wasser ad 100%
8. Permethrin 1%, Cocamidopropylbetain 10%, Wasser ad 100%
9. Nur Cocamidopropylbetain 10% und Wasser ad 100% zur Kontrolle

### 1) Kleiderläuse (Pediculus humanus corporis) (nicht erfindungsgemäß):

Jeweils 10 Kleiderläuse aus einer Laborkultur der Universität Düsseldorf wurden in einer Petrischale auf Filtrierpapier gesetzt. Auf jede Laus wurden zwei Tropfen der zu prüfenden Lösung pipettiert. Die überschüssige Flüssigkeit wurde vom Papier aufgesaugt, so dass die Läuse nur leicht mit den Lösungen benetzt blieben,

Nach 1, 5, 10 und 30 Minuten wurde die Mobilität der Läuse mit Hilfe einer Stereolupe beobachtet. Die Vitalität der Testorganismen wurde nach folgendem Schlüssel bewertet, wobei jeweils mindestens 8 von 10 Tieren den Bewertungskriterien entsprechen:
Es bedeuten (in allen nachfolgenden Tabellen):
+++: keine verminderte Mobilität oder erkennbare Einschränkungen der Vitalität;
++: die Bewegungen der Extremitäten sind eingeschränkt oder vermindert, die Tiere krabbeln nicht umher;
+: geringe oder nur zuckende Bewegungen der Extremitäten, die Klauen der Klammerbeine von Läusen werden geöffnet gehalten;
- : keine Bewegungen der Extremitäten, Darmperistaltik ist vorhanden,
- - : keine Bewegungen der Extremitäten, keine Darmperistaltik Versuchsreihe (1a) zum Vergleich der Wirksamkeit verschiedener Wirkstoffe:

**Vitalität nach verschiedenen Einwirkzeiten**

| Nr. | Wirkstoff | 1 min | 5 min | 10 min | 30 min |
|---|---|---|---|---|---|
| 1 Erf. * | Glycerinmonostearatcitrat | + | - | -- | -- |
| 2 Erf. * | Glycerinmonooleatlactat | + | - | -- | -- |
| 3 Erf. * | Glycerinmonolaurat | + | + | - | - |
| 4 Erf. * | Glycerinmonocaprat | ++ | + | + | + |
| 5 Vergl. | Isopropylmyristat | +++ | +++ | +++ | +++ |
| 6 Vergl. | Capryl-/Caprinsäuretriglycerid | ++ | ++ | ++ | ++ |
| 7 Vergl. | Kokosnussöl | +++ | +++ | +++ | +++ |
| 8 Vergl. | Permethrin | +++ | +++ | ++ | + |
| 9 Kontrolle | Cocamidopropylbetain | +++ | +++ | +++ | +++ |

| | | | | | |
|---|---|---|---|---|---|
| * Nicht erfindungsgemäß | | | | | |

Der Versuch zeigt, dass die Mittel 1 bis 4 die Läuse innerhalb kurzer Zeit vollständig immobilisieren. Die Vergleichssubstanzen 5 bis 8 wirken dagegen nicht oder nur schwach. Isopropylmyristat hat keine Wirkung, auch nicht bei Einwirkdauer von mehreren Stunden. Bei Permethrin tritt erst nach längerer Einwirkdauer als in diesen Versuchen dokumentiert ein abtötender Effekt auf die Insekten ein. Das Lösungsmittelsystem aus Cocamidopropylbetain und Wasser (Kontrolle) hat während der Versuchsdauer keinen erkennbaren Einfluss auf die Vitalität der Läuse.

Versuchsreihe (1b) zur Wirksamkeit der Substanzen auf Kleiderläuse in Abhängigkeit von der Konzentration des Wirkstoffs:
- Glycerinmonostearatcitrat (1 / 2,5 / 5 / 10%) in Cocamidopropylbetain und Wasser

**Vitalität nach verschiedenen Einwirkzeiten:**

| *Wirkstoffgehalt in %* | 1 min | 5 min | 10 min | 30 min |
|---|---|---|---|---|
| 1 | +++ | ++ | + | + |
| 2,5 | + | + | -- | -- |
| 5 | + | - | -- | -- |
| 10 | + | -- | -- | -- |

- Glycerinmonolaurat (1 / 2,5 / 5 / 10%) in Cocamidopropylbetain und Wasser

**Vitalität nach verschiedenen Einwirkzeiten:**

| *Wirkstoffgehalt in %* | 1 min | 5 min | 10 min | 30 min |
|---|---|---|---|---|
| 1 | +++ | ++ | ++ | ++ |
| 2,5 | ++ | ++ | - | - |
| 5 | + | + | - | - |
| 10 | + | - | -- | -- |

- Kontrolle ohne Wirkstoff: Cocamidopropylbetain 10% und Wasser ad 100%

**Vitalität nach verschiedenen Einwirkzeiten:**

| *Wirkstoffgehalt in* % | 1 min | 5 min | 10 min | 30 min |
|---|---|---|---|---|
| 0 | +++ | +++ | +++ | +++ |

### 2) Kopfläuse (Pediculus humanus capitis)

Kopfläuse wurden mit Einverständnis der Kinder und ihrer Eltern aus den Haaren von 6 bis 11 Jahre alten Schulkindern gesammelt, unverzüglich ins Labor gebracht und innerhalb von 4 Stunden mit den erfindungsgemäßen Mitteln getestet. Die Versuche wurden in der gleichen Weise wie unter Versuch 1 angegeben durchgeführt und nach denselben Kriterien ausgewertet.

Glycerinmonostearatcitrat 5%, Cocamidopropylbetain 10%, Wasser 85% *Vitalität nach verschiedenen Einwirkzeiten*:

| 1 min | 5 min | 10 min | 30 min |
|---|---|---|---|
| + | - | -- | -- |

Glycerinmonolaurat 5%, Cocamidopropylbetain 10%, Wasser 85% *Vitalität nach verschiedenen Einwirkzeiten*:

| 1 min | 5 min | 10 min | 30 min |
|---|---|---|---|
| + | + | - | -- |

Isopropylmyristat 20%, Cocamidopropylbetain 10%, Wasser 70% (Vergleich) *Vitalität nach verschiedenen Einwirkzeiten*:

| 1 min | 5 min | 10 min | 30 min |
|---|---|---|---|
| +++ | +++ | +++ | +++ |

Kokosnussöl 10%, Cocamidopropylbetain 10%, Wasser 70% (Vergleich) *Vitalität nach verschiedenen Einwirkzeiten:*

| 1 min | 5 min | 10 min | 30 min |
|---|---|---|---|
| +++ | +++ | +++ | ++ |

Der Versuch zeigt, dass die Kopfläuse bei Behandlung mit den erfindungsgemäßen Mitteln innerhalb kurzer Zeit völlig unbeweglich werden, und dabei werden die Krallen der Klammerbeine zumeist geöffnet. Es ist offensichtlich, dass nach Anwendung einer erfindungsgemäßen Lösung bzw. eines Shampoo die benetzten Läuse unbeweglich werden und sich nicht mehr festhalten können, so dass sie durch nachfolgendes Ausspülen der Haare mit Wasser vom Kopf entfernt werden können.

## Patentansprüche

1. Mittel zur Verwendung in einem Verfahren zum Abtöten von Kopfläusen (Pediculus humanus capitis) bei Menschen, **dadurch gekennzeichnet, dass** es als wirksamen Bestandteil Glycerin enthält, das mono- oder di-verestert ist mit einer oder zwei verschiedenen oder gleichen aliphatischen, gesättigten oder ungesättigten C₆ -C₁₈ Carbonsäuren, und das zusätzlich mit Milchsäure, Zitronensäure, und/oder Weinsäure mono- oder di-verestert ist, oder Glycerinmomolaurat.

2. Mittel zur Verwendung in einem Verfahren nach Anspruch 1, **dadurch gekennzeichnet, dass** es ein Mono- oder Diglycerid enthält, das mit Stearinsäure, Laurinsäure oder Ölsäure und zusätzlich mit Zitronensäure oder Milchsäure verestert ist.

3. Mittel zur Verwendung in einem Verfahren nach Anspruch 1 oder 2, in dem der Anteil an einem oder mehreren wirksamen Glyceriden zwischen 0,1 und 95 Gew.-% beträgt, bezogen auf die Gesamtmenge des Mittels.

4. Mittel zur Verwendung in einem Verfahren nach einem oder mehreren der Ansprüche 1 bis 3, in dem bevorzugt zwischen 0,5 und 15 Gew.-% an einem oder mehreren wirksamen Glyceriden enthalten sind, bezogen auf die Gesamtmenge des Mittels.

5. Mittel zur Verwendung in einem Verfahren nach einem oder mehreren der Ansprüche 1 bis 4, **dadurch gekennzeichnet, dass** es mit zusätzlichen Hilfs- oder Wirkstoffen formuliert wird

6. Mittel zur Verwendung in einem Verfahren nach Anspruch 5, **dadurch gekennzeichnet, dass** es als Shampoo formuliert wird.

7. Mittel zur Verwendung in einem Verfahren nach einem oder mehreren der Ansprüche 1 bis 5, **dadurch gekennzeichnet, dass** es mit zusätzlichen Hilfsstoffen formuliert wird als Lösung, flüssiges Konzentrat, Lotion, Gel, Spray, Puder, Paste oder Pulver.

8. Mittel zur Verwendung in einem Verfahren nach einem oder mehreren der Ansprüche 1 bis 7, **dadurch gekennzeichnet, dass** es zusätzlich einen Extrakt aus Azadirachta indica (Neem) oder einen Pflanzenextrakt aus einer Quassia-Art enthält.

9. Mittel zur Verwendung in einem Verfahren nach einem oder mehreren der Ansprüche 1 bis 8, **dadurch gekennzeichnet, dass** es zudem einen oder mehrere insektizide oder akarizide Wirkstoff(e) enthält.

10. Mittel zur Verwendung in einem Verfahren nach Anspruch 9, **dadurch gekennzeichnet, dass** der insektizide oder akarizide Wirkstoff aus der Gruppe der Pyrethroide, Malathion, Terpenoide, Neonicotinoide, makrocyclischen Lactone, Phenylpyrazole, Alkylphosphate oder Carbamate ausgewählt wird.

11. Mittel zur Verwendung in einem Verfahren nach einem oder mehreren der Ansprüche 1 bis 10, **dadurch gekennzeichnet, dass** es zudem eine oder mehrere juckreizstillende, wundheilende, haut-, haarpflegende oder kosmetisch wirksame Substanz(en) enthält.

12. Mittel zur Verwendung in einem Verfahren nach einem oder mehreren der Ansprüche 1 bis 1 1 , **dadurch gekennzeichnet, dass** es zudem eine oder mehrere antioxidative, konservierende oder mikrobizide Substanz(en) enthält.

13. Mittel zur Verwendung in einem Verfahren nach einem oder mehreren der Ansprüche 1 bis 12, **dadurch gekennzeichnet, dass** es zudem einen oder mehrere Parfümstoff(e) und/oder Farbstoff(e) enthält.

## Claims

1. Agent for use in a method for killing head lice (*pediculus humanus capitis*) in humans, **characterized in that** it contains, as active ingredient, glycerol which is mono- or diesterified with one or two identical or different aliphatic, saturated or unsaturated C₆-C₁₈ carboxylic acids, und which is additionally mono- or diesterified with lactic acid, citric acid and/or tartaric acid, or glyceryl monolaurate.

2. Agent for the use in a method according to claim 1, **characterized in that** it contains a mono- or diglyceride which is esterified with stearic acid, lauric acid or oleic acid and which is additionally esterified with citric acid or lactic acid.

3. Agent for the use in a method according to claim 1 or 2, wherein the amount of one or more effective glycerides is from 0.1 to 95 % by weight, based on the total amount of the agent.

4. Agent for the use in a method according to one or more of claims 1 to 3, wherein preferably from 0.5 to 15 % by weight of one or more effective glycerides are contained, based on the total amount of the agent.

5. Agent for the use in a method according to one or more of claims 1 to 4, **characterized in that** it is formulated with additional auxiliary agents or active ingredients.

6. Agent for the use in a method according to claim 5, **characterized in that** it is formulated as shampoo.

7. Agent for the use in a method according to one or more of claims 1 to 5, **characterized in that** it is formulated, with additional auxiliary agents, as solution, liquid concentrate, lotion, gel, spray, powder, paste or fine powder.

8. Agent for the use in a method according to one or more of claims 1 to 7, **characterized in that** it contains additionally an extract of *azadirachta indica* (neem) or a plant extract of a *quassia* species.

9. Agent for the use in a method according to one or more of claims 1 to 8, **characterized in that** it contains additionally one or more insecticidally or acaricidally active ingredients.

10. Agent for the use in a method according to claim 9, **characterized in that** the insecticidally or acaricidally active ingredient is selected from the group consisting of pyrethroids, malathione, terpenoids, neonicotinoids, macrocyclic lactones, phenylpyrazole, alkylphosphates or carbamates.

11. Agent for the use in a method according to one or more of claims 1 to 10, **characterized in that** it contains additionally one or more anti-itching, wound-healing, skin-care, hair-care or cosmetically effective substance(s).

12. Agent for the use in a method according to one or more of claims 1 to 11, **characterized in that** it contains additionally one or more antioxidant, preservative or microbicidal substance(s).

13. Agent for the use in a method according to one or more of claims 1 to 12, **characterized in that** it contains additionally one or more perfume(s) and/or colorant(s).

## Revendications

1. Agent pour l'utilisation dans un procédé pour tuer des poux de tête (Pediculus humanus capitis) chez l'homme, **caractérisé en ce qu'**il contient de la glycérine comme ingrédient efficace, la glycérine étant estérifié comme mono- ou di-ester avec un ou deux acides carboxyliques C₆ - C₁₈ saturés ou insaturés, aliphatiques, différents ou identiques et étant supplémentairement estérifié comme mono- ou di-ester avec l'acide lactique, l'acide citrique et/ou l'acide tartrique ou étant du monolaurate de glycérine.

2. Agent pour l'utilisation dans un procédé selon la revendication 1, **caractérisé en ce qu'**il contient un mono- ou di-glycéride, qui est estérifié avec l'acide stéarique, l'acide laurique ou l'acide oléique et supplémentairement avec l'acide citrique ou l'acide lactique.

3. Agent pour l'utilisation dans un procédé selon la revendication 1 ou la revendication 2, dans lequel la proportion d'un ou de plusieurs glycérides efficaces est comprise entre 0,1 et 95 % en poids par rapport à la quantité totale de l'agent.

4. Agent pour l'utilisation dans un procédé selon l'une ou plusieurs des revendications 1 à 3, dans lequel de préférence entre 0,5 et 15 % en poids d'un ou de plusieurs glycérides efficaces sont contenus par rapport à la quantité totale de l'agent.

5. Agent pour l'utilisation dans un procédé selon l'une ou plusieurs des revendications 1 à 4, **caractérisé en ce qu'**il est formulé avec des adjuvants ou des principes actifs supplémentaires.

6. Agent pour l'utilisation dans un procédé selon la revendication 5, **caractérisé en ce qu'**il est formulé comme shampoing.

7. Agent pour l'utilisation dans un procédé selon l'une ou plusieurs des revendications 1 à 5, **caractérisé en ce qu'**il est formulé avec des adjuvants supplémentaires comme une solution, un concentré liquide, une lotion, un gel, un spray, une poudre fine, une pâte ou une poudre.

8. Agent pour l'utilisation dans un procédé selon l'une ou plusieurs des revendications 1 à 7, **caractérisé en ce qu'**il contient supplémentairement un extrait d'azadirachta indica (neem) ou un extrait végétal d'une espèce de quassia.

9. Agent pour l'utilisation dans un procédé selon l'une ou plusieurs des revendications 1 à 8, **caractérisé en ce qu'**il contient en plus un ou plusieurs insecticide(s) ou une ou plusieurs substance(s) active(s) acaricide(s).

10. Agent pour l'utilisation dans un procédé selon la revendication 9, **caractérisé en ce que** l'insecticide ou la substance active acaricide est sélectionné(e) dans le groupe des pyréthroïdes, le malathion, des terpénoïdes, des néonicotinoïdes, des lactones macrocycliques, des phénylpyrazoles, des phosphates d'alkyle ou des carbamates.

11. Agent pour l'utilisation dans un procédé selon l'une ou plusieurs des revendications 1 à 10, **caractérisé en ce qu'**il contient en plus une ou plusieurs substance(s) antiprurigineuse(s), cicatrisante(s), soignante(s) pour la peau et les cheveux ou active(s) du point de vue cosmétique.

12. Agent pour l'utilisation dans un procédé selon l'une ou plusieurs des revendications 1 à 11, **caractérisé en ce qu'**il contient en plus une ou plusieurs substance(s) antioxydante(s), conservatrice(s) ou microbicide(s).

13. Agent pour l'utilisation dans un procédé selon l'une ou plusieurs des revendications 1 à 12, **caractérisé en ce qu'**il contient en plus un ou plusieurs parfum(s) et/ou colorant(s).
